# EUROPEAN PATENT APPLICATION

(11) **EP 3 734 570 A1**
(43) Date of publication of application: **04.11.2020**
(21) Application number: 17835987.3
(22) Date of filing: 28.12.2017
(51) Int. Cl.: G08G 1/017

(54) **VEHICLE DETECTION METHOD, APPARATUS, DEVICE AND READABLE STORAGE MEDIUM**

(71) Applicant: Shenzhen Launch Software Co., Ltd., Shenzhen Guangdong 518000 (CN)
(72) Inventor: LIU, Jun, Shenzhen Guangdong 518000 (CN); WEI, Zewei, Shenzhen Guangdong 518000 (CN)
(74) Representative: MERH-IP Matias Erny Reichl Hoffmann Patentanwälte PartG mbB
(86) International application number: PCT/CN2017/119577
(87) International publication number: WO 2019/127279

(57) **Abstract**

A vehicle detection method, device, equipment, and readable storage medium, the vehicle detection method comprises: obtaining at least two vehicle identification numbers corresponding to the vehicle; judging whether the at least two vehicle identification numbers are consistent; and outputting alarm information if the at least two vehicle identification numbers are inconsistent. In the present invention, at least two vehicle identification numbers corresponding to the vehicle are obtained, and whether the at least two vehicle identification numbers are consistent is judged; if there is a vehicle identification number of a certain vehicle that is different from other vehicle identification numbers, alarm information can be output, thereby facilitating the police officer in checking the vehicle according to the alarm information, providing convenience for the police officer to perform duty, and thereby improving a vehicle checking efficiency.

## Description

### THCHNICAL FIELD

The present invention relates to the technical field of vehicles, and more particularly, relates to a vehicle detection method, device, equipment, and readable storage medium.

### BACKGROUND

With continuous development of technology and continuous improvement of the people's living levels, possessive quantity of vehicles is increasing gradually. Since vehicles are becoming more and more popularized, there are more and more stolen vehicles.

In the prior art, finding stolen vehicles can only be performed by police officers according to their experiences. In today of high technologies, it is more and more difficult to find stolen vehicles, which brings troubles to works of the police officers, and thereby causing a lower vehicle checking efficiency.

### TECHNICAL PROBLEM

For this reason, embodiments of the present invention provide a vehicle detection method, device, equipment and readable storage medium, which can solve a technical problem in the prior art that there is a much lower checking efficiency of stolen vehicles.

### TECHNICAL SOLUTION

In a first aspect, the embodiments of the present invention provide a vehicle detection method comprising:
obtaining at least two vehicle identification numbers corresponding to the vehicle;
judging whether the at least two vehicle identification numbers are consistent; and
outputting alarm information if the at least two vehicle identification numbers are inconsistent.

In second first aspect, the embodiments of the present invention provide a vehicle detection device comprising:
an obtaining module configured to obtain at least two vehicle identification numbers corresponding to the vehicle;
a judging module configured to judge whether the at least two vehicle identification numbers are consistent; and
a pushing module configured to, when the at least two vehicle identification numbers are inconsistent, output alarm information.

In a third first aspect, the embodiments of the present invention provide a vehicle detection equipment comprising a detector and a controller; wherein:
the detector is connected with the controller;
the detector is configured to: detect at least two vehicle identification numbers corresponding to the vehicle, and transmit the at least two vehicle identification numbers to the controller;
the controller is configured to: obtain the at least two vehicle identification numbers corresponding to the vehicle and judge whether the at least two vehicle identification numbers are consistent, and output alarm information if the at least two vehicle identification numbers are inconsistent.

In a fourth aspect, the embodiments of the present invention provide a computer readable storage medium, wherein the computer readable storage medium stores computer program which implements the steps of the method provided by the first aspect when being executed by one or a plurality of processor(s).

In a fifth aspect, the embodiments of the present invention provide a computer program product, the computer program product includes computer program which implements the steps of the method provided by the first aspect of the embodiments of the present invention when being executed by one of a plurality of processor(s).

### ADVANTAGEOUS EFFECTS

In the embodiments of the present invention, at least two vehicle identification numbers corresponding to the vehicle are obtained, and whether the at least two vehicle identification numbers are consistent is judged; if there is a vehicle identification number of a certain vehicle that is different from other vehicle identification numbers, the alarm information can be output, it is convenient for the police officer to have a check for the vehicle according to the alarm information, thereby providing convenience for the police officer to perform duty, and improving a vehicle checking efficiency.

### BRIEF DESCRIPTION OF THE DRAWINGS

In order to describe the embodiments of the present invention or the technical solutions in the prior art more clearly, a brief introduction regarding the accompanying drawings that need to be used for describing the embodiments or the prior art is given below; it is obvious that the accompanying drawings described as follows are only some embodiments of the present invention, for those skilled in the art, other drawings can be obtained according to the current drawings on the premise of paying no creative labor.
FIG.1 illustrates a flow chart of a vehicle detection method provided by a first embodiment of the present invention;
FIG. 2 illustrates a flow chart of a vehicle detection method provided by a second embodiment of the present invention;
FIG. 3 illustrates a flow chart of a vehicle detection method provided by a third embodiment of the present invention;
FIG. 4 illustrates a schematic block diagram of a vehicle detection device provided by a fourth embodiment of the present invention;
FIG. 5 illustrates a schematic block diagram of a vehicle detection equipment provided by a fifth embodiment of the present invention.
FIG. 6 illustrates a schematic block diagram of the vehicle detection equipment provided by a sixth embodiment of the present invention.

### PREFERRED EMBODIMENTS OF THE PRESENT INVENTION

In the following description, in order to describe but not intended to limit, concrete details such as specific system structure, technique, and so on are proposed, thereby facilitating comprehensive understanding of the embodiments of the present invention. However, it should be clear for one or ordinary skill in the art that, the present invention can also be implemented in some other embodiments without these concrete details. In some other conditions, detailed explanations of method, circuit, device and system well known to the public are omitted, so that unnecessary details can be prevented from obstructing the description of the present invention.

It should be understood that, when a term "comprise" is used in the description and annexed claims, the term "include" indicates existence of the described characteristics, the whole, steps, operations, elements and/or components, but not exclude existence or adding of one or a plurality of other characteristics, the whole, steps, operations, elements, components and/or combination thereof.

It should also be understood that, terms used in the description of the present invention are for the purpose of describing specific embodiments but not intended to limit the present invention. As is used in the description and the annexed claims of the present invention, unless other conditions are indicated clearly in the context, otherwise, singular forms of terms such as "a", "one", "the" are intended to include plural forms.

It should be further understood that, terms "and/or" used in the description and the annexed claims of the present invention are referred to as any combination of one or a plurality of listed item(s) associated with each other and all possible items, and including these combinations.

As is used in the description and the annexed claims, a term "if' can be interpreted as "when" or "once" or "in response to determination" or "in response to detection". Similarly, terms such as "if it is determined that", or "if it is detected that (a described condition or event)" can be interpreted as "once it is determined" or "in response to the determination" or "once it is detected that (the described condition or event)" or "in response to the detection (the described condition or event)".

Before introducing the specific embodiments, an application scenario of the embodiments of the present invention is introduced firstly, when a police officer is on duty, he/she can use a vehicle detection device to perform a diagnosis for the vehicle, the vehicle detection device can obtain information including VIN (Vehicle Identification Number) corresponding to the vehicle, thereby providing conveniences for the police officer.

Technical solutions of the present invention are described below with reference to specific embodiments.

### Embodiment I

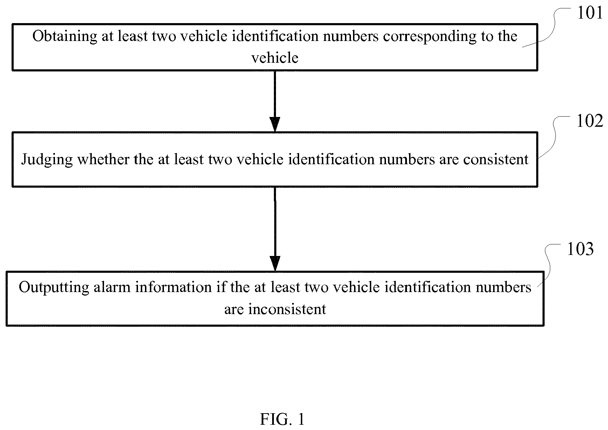

Embodiment I of the present invention provides a vehicle detection method. FIG. 1 illustrates a flow chart of the vehicle detection method. As shown in FIG. 1, the method in this embodiment can comprise:
step 101, obtaining at least two VINs (Vehicle Identification Numbers) corresponding to the vehicle;
VIN is consisted of a plurality of symbols, comprises information including a manufacturer of the vehicle, age, vehicle model, vehicle body type and codes, motor codes and assembly site, and has very important meaning for accurate diagnosis and maintenance of the vehicle.

In this embodiment, various methods can be used to obtain VIN of the vehicle. For example, it is possible to use a scanning device to scan the VIN of the vehicle, it is also possible to obtain vehicle plate information of the vehicle and obtain the corresponding VIN according to the vehicle plate information.

Step 102, judging whether the at least two VINs are consistent.

In this embodiment, judging whether the at least two VINs are consistent is specifically referred to as judging whether the two VINs are the same. If the at least two VINs are the same, it is considered that the at least two VINs are consistent; if there is/are one or a plurality of VIN(s) that is/are different from other VINs in the at least two VINs, it is considered that the at least two VINs are inconsistent.

Step 103, if the at least two VINs are inconsistent, outputting alarm information.

The at least two VINs obtained in step 101 belong to the VINs of the same vehicle, therefore, the at least two VINs should be consistent, if they are inconsistent, it means that the vehicle may be a defective vehicle. Therefore, when there is a VIN that is different from other VINs, the alarm information can be output.

Specifically, outputting alarm information can comprise: pushing the alarm information to the police officer, and/or transmitting the alarm information to a server.

The alarm information can be pushed to a police officer by various methods. For example, the alarm information can be displayed to the police officer in the form of words, pictures, videos, or the alarm information can be pushed to the police officer in the manner of short message, telephone, and news, and is not limited by this embodiment. Or, the alarm information can also be sent to the server, and pushed by the server to the relevant police officer to be analyzed, alarmed or stored, the server can be a police affairs platform, etc.

The alarm information which is pushed to the police officer can be used for alarming the police officer that the vehicle has a possibility of belonging to illegal vehicles; for example, the alarm information can be presented as "warning, the VINs are inconsistent" or "this vehicle may be a defective vehicle", etc. The illegal vehicles can be the vehicles that run on the road illegally, and need to be punished, such as stolen vehicles or refitted vehicles, etc.

In an actual application, the police officer can use the vehicle detection device to have a check for the vehicles to be diagnosed, in a checking process, the vehicle detection device can obtain the at least two VINs corresponding to the vehicle through the method in this embodiment, if the at least two VINs are consistent, it is unnecessary for the police officer to have a further check for the vehicle, or, it only needs to perform a simple check. When the VINs are inconsistent, the vehicle detection device can alarm the police officer, the police officer can perform a further check for the vehicles to be troubleshot according to the alarm from the vehicle detection device.

In the vehicle detection method provided by the present invention, at least two VINs corresponding to the vehicle are obtained, and whether the at least two VINs are consistent is judged, if there is a VIN of a certain vehicle that is different from other VINs, the alarm information can be output, thereby facilitating the police officer in checking the vehicle according to the alarm information, providing convenience for the police officer to perform duty, and thereby improving a vehicle checking efficiency.

### Embodiment II

Embodiment II of the present invention provides a vehicle detection method. This embodiment is based on the technical solutions provided by Embodiment I and implements obtaining the at least two VINs (Vehicle Identification Numbers) through an OBD (On-Board Diagnostic) interface, a laser scanning device/a photographing device, and a NFC (Near Field Communication) device, and obtaining registration information corresponding to a vehicle from a server and pushing the registration information to a police officer when the at least two VINs are inconsistent.

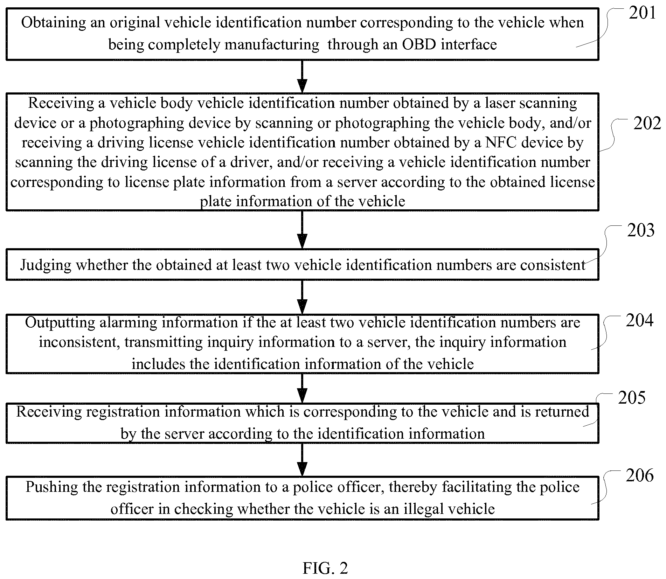

FIG. 2 illustrates a flow chart of a vehicle detection method provided by Embodiment II of the present invention. As shown in FIG. 2, the method in this embodiment can comprise:
Step 201, obtaining an original VIN (Vehicle Identification Number) corresponding to a vehicle when leaving factory via the OBD interface.
Step 202, receiving a vehicle body vehicle identification number obtained by a laser scanning device or photographing device by scanning or photographing the vehicle body, and/or receiving a driving license vehicle identification number obtained by a NFC device by scanning a driving license of a driver, and/or receiving a VIN corresponding to vehicle plate information from a server according to obtained vehicle plate information of the vehicle.

In this embodiment, steps 201-202 can be used to implement obtaining the at least two VINs corresponding to the vehicle.

Exemplarily, the step 202 can include three steps in the following

Step 2021, receiving a vehicle body VIN obtained by the laser scanning device or photographing device by scanning or photographing the vehicle body.

Step 2022, receiving the driving license VIN obtained by the NFC device by scanning the driving license of the driver who drives this vehicle.

Step 2023, receiving the VIN corresponding to the vehicle plate information from the server according to obtained vehicle plate information of the vehicle.

It can be understood for one of ordinary skill in the art that, in the aforesaid steps 2021-2023, steps can be deleted or combined and a sequencing of these various steps can be switched according to an actual need, etc.

Specifically, the original VIN of the vehicle can be obtained through the OBD interface, more specifically, the original VIN can be obtained through OBD 11-16 (a diagnostic interface of OBD with 16 PIN and opened to the public), the original VIN is the VIN corresponding to the vehicle when it being completely manufacturing, and is also the original and unmodifiable VIN of the vehicle. The original VIN can be the VIN obtained from a motor system through the OBD interface.

In this embodiment, the original VIN can be obtained by scanning OBD II standard protocol, broadcasting and monitoring vehicle bus, scanning vehicle dedicated diagnostic protocol, and a specific implementation thereof belongs to the prior at, and isn't repeatedly described herein.

The VIN corresponding to the vehicle body can be obtained by the laser scanning device or photographing device, and is referred to as the vehicle body VIN. The vehicle body VIN can be located at the vehicle window or some other locations of the vehicle body, the police officer can scan the vehicle body VIN via the laser scanning device, or perform a photographing or identification for the vehicle body VIN through the photographing device, thereby achieving obtaining of the vehicle body VIN.

The VIN corresponding to the driving license can be obtained by the NFC (Near Field Communication) device, and is referred to as the driving license VIN. The driving license VIN can be provided therein with a NFC chip, the NFC chip can store VIN information inside it. The police officer can use the NFC device to scan the driving license of the driver who drives the vehicle, thereby obtaining the driving license VIN.

The corresponding VIN can also be obtained according to vehicle plate information. Specifically, a step of receiving the VIN corresponding to the vehicle plate information from the server according to the obtained vehicle plate information of the vehicle can include: obtaining the vehicle plate information of the vehicle, transmitting the vehicle plate information to the server, and receiving the VIN corresponding to the vehicle plate information sent by the server.

Wherein, the vehicle plate information can be obtained by the laser scanning device or photographing device by scanning or photographing the vehicle plate of the vehicle, or be inputted manually by the police officer. By adding a step of obtaining and judging the VIN corresponding to the vehicle plate information, those possibly defective vehicles can be sifted more accurately.

It can be understood that, the VINs obtained by the OBD interface, the laser scanning device, the photographing device, and the NFC device may belong to different formats respectively, for example, the received at least two VINs may be in a digital format, a picture format, a QR code format, etc. Before judging whether the at least two VINs are consistent by comparison, the VIN in the digital format, the VIN in the picture format, and the VIN in the QR code format are converted into the VIN with an unified format, for example, all these VINs are converted into the one in the digital format and then are compared.

In step 203, judging whether the obtained at least two VINs are consistent.

In this embodiment, after the at least two VINs are obtained in the steps 201-202, the at least two VINs can be compared with each other so as to determine whether the at least two VINs are consistent.

Wherein, the at least two VINs in step 203 can not only include the original VIN obtained by step 201, but also include at least one of the following VINs obtained by executing step 202: the vehicle body VIN, the driving license VIN, and the VIN corresponding to the vehicle plate information.

If all of the at least two VINs are identical, it is considered that the at least two VINs are consistent; if there is at least one VIN that is different from other VINs, it is considered that the at least two VINs are not identical.

Preferably, judging whether the at least two VINs are consistent can comprise: comparing the original VIN with the vehicle body VIN, and/or the driving license VIN, and/or the VIN corresponding to the vehicle plate information one by one. If a comparison result indicates that they are identical, the at least two VINs are judged to be consistent; if the comparison result indicates that they are different, the at least two VINs are judged to be inconsistent.

Wherein, comparing the original VIN with the vehicle body VIN, and/or the driving license VIN, and/or the VIN corresponding to the vehicle plate information one by one can be specifically: comparing the original VIN with the vehicle body VIN, and/or comparing the original VIN with the driving license VIN, and/or comparing the original VIN with the VIN corresponding to the VIN corresponding to the vehicle plate information.

In other words, the original VIN can be compared with at least one of the following VINs: the vehicle body VIN, the driving license VIN, the VIN corresponding to the vehicle plate information.

For example, the obtained at least two VINs comprises the original VIN, the vehicle body VIN, and the driving license VIN, consequently, the original VIN can be compared with the vehicle body VIN firstly, and then the original VIN is compared with the driving license VIN.

For another example, the obtained at least two VINs comprises the original VIN, the vehicle body VIN, the driving license VIN, consequently, the VIN corresponding to the vehicle plate information, the original VIN can be compared with the vehicle body VIN firstly, and then the original VIN is compared with the driving license VIN, and lastly, the original VIN is compared with the VIN corresponding to the vehicle plate information.

If the original VIN is not identical to at least one of other VINs, it is considered that the comparison result is not identical, at this time, it can be judged that the obtained at least two VINs are inconsistent; if the original VIN is identical to at least one of other VINs, it is considered that the comparison result is identical, at this time, it can be judged that the obtained at least two VINs are identical.

When it is found that the original VIN is not identical to any one of other VINs by comparison, a comparing operation for the rest VINs which have not yet been compared can be stopped, or the comparison operation can be continued to be performed until the whole comparing operation is finished, the present embodiment is not limited herein.

In step 204, if the at least two VINs are inconsistent, outputting alarm information, transmitting inquiry information to a server, the inquiry information includes identification information of the vehicle.

If the original VIN, the vehicle body VIN and the driving license VIN are inconsistent, it means that there may exist problems in the vehicle, thus, the alarm information is output.

In addition, when the obtained at least two VINs are inconsistent, registration information corresponding to the vehicle can also be further searched by the server, thereby providing reference for the police officer.

Specifically, the inquiry information can be sent to the server, the inquiry information is used by the server to search the registration information corresponding to the vehicle, the inquiry information can include the identification information of the vehicle, the identification information of the vehicle can include at least one of the following: the original VIN, the vehicle body VIN, the driving license VIN, the vehicle plate information, etc.

In step 205, receiving the registration information which is corresponding to the vehicle and is returned by the server according to the identification information.

In step 206, pushing the registration information to the police officer, thereby facilitating the police officer in checking whether the vehicle is an illegal vehicle.

The registration information can include at least one of the following: vehicle owner information, vehicle plate information, vehicle information, VIN change record information, history location information, maintenance data information.

The vehicle owner information can include a vehicle owner name, a sex, an identification number, a residence, a contact number, etc. The vehicle plate information can include a vehicle plate number, vehicle registration time, etc. The vehicle information can include a vehicle type, color, brand, age limit, etc. The VIN change record can include a vehicle updating record, and further include VINs corresponding to each of components of history registration of the vehicle, such as the VIN corresponding to the motor. The history location information can include geographic location information of at least two different time points of the vehicle. The maintenance data information can include maintenance time of the vehicle, content of maintenance, maintenance site, etc.

The registration information can be pushed to the police officer in the manner of text displaying, voice broadcasting, short message, information, telephone, etc. The police officer can perform a further check for the vehicle according to the registration information, and determine whether this vehicle is the illegal vehicle synthetically.

Further, the obtained information can be printed out, for example, the at least two VINs corresponding to the vehicle, the registration information of the vehicle, and so on are printed to serve as a voucher or archive information.

Furthermore, except for the aforesaid original VIN, vehicle body VIN, driving license VIN, VINs can be obtained from other components of the vehicle and a comprehensive comparison can be performed.

For example, except for obtaining the VIN from the motor system, corresponding VINs can be obtained from some other electronic control systems such as a chassis system, an electronic and electrical equipment system, and so on via the OBD interface. Correspondingly, whether the original VIN, the vehicle body VIN, the driving license VIN and VINs obtained from some other electronic control systems are consistent can be judged, if they are inconsistent, it means that the vehicle may be a defective vehicle.

In an actual application, the police officer can use the vehicle detection device to have a check for the vehicle, the vehicle detection device can be provided therein with a diagnosing module, the diagnosing module is used for connecting with the vehicle, has a diagnostic interface of OBD 11-16, the diagnostic module can include a physical layer and a link layer having vehicle communication protocol, the link layer includes all of vehicle diagnosis communication protocol. Besides, the vehicle detection device can be provided therein with the NFC device, the laser scanning device and the photographing device, etc.

In a checking process, the vehicle detection device can use the method of the present embodiment to obtain the at least two VINs corresponding to the vehicle through the OBD interface, the NFC device, the laser scanning device and the photographing device, etc. If the at least two VINs are consistent, there is no need for the police officer to further check the vehicle, or it only needs to perform a simple check.

When the VINs are inconsistent, the vehicle detection device can perform a warning for the police officer. Besides, the vehicle detection device can be provided therein with a communication device, the communication device may include at least one of the following: 3G module, 4G module, 5G module, Wi-Fi module, etc. A communication with the server can be implemented by the communication device. When the VINs are inconsistent, detailed registration information corresponding to the vehicle can be obtained from the server through the communication device, and provided for the police officer to perform a further inspection for the vehicle according to the registration information.

Preferably, the vehicle detection device can be implemented based on X4310BD intelligent identification technology of Shenzhen Launch Software Co., Ltd., thereby providing a more simple, more effective, and more professional judgment standard for the police officer to carry out a vehicle inspection.

In the vehicle detection method in this embodiment, the at least two VINs can be obtained by the OBD interface, the laser scanning device, the photographing device and the NFC device, fast and accurately; when the at least two VINs are inconsistent, the registration information corresponding to the vehicle can be obtained from the server and pushed to the police officer, such that the police officer can find defective vehicles timely and accurately, thereby making the stolen vehicles and refitted vehicles get nowhere to run.

### Embodiment III

The embodiment III of the present invention provides a vehicle detection method. This embodiment is based on the technical solution provided by embodiment I , and transmits a VIN (Vehicle Identification Number) to a server, and determines whether a detected vehicle is a stolen vehicle through a stolen vehicle database.

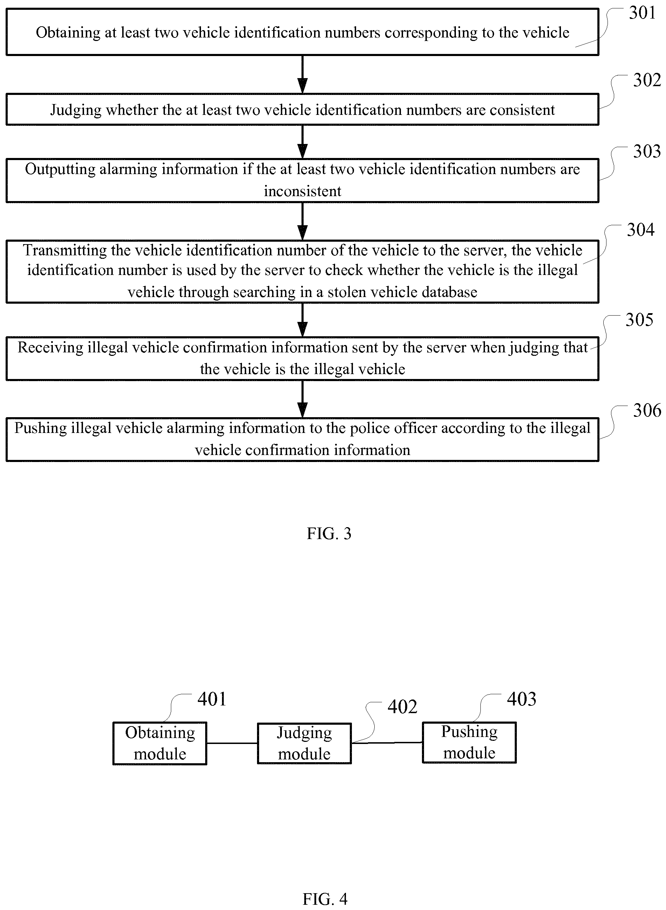

FIG. 3 illustrates a flow chart of a vehicle detection method provided by embodiment III of the present invention. As shown in FIG. 3, the method in this embodiment can comprise:
Step 301, obtaining at least two VINs corresponding to the vehicle.
Step 302, judging whether the at least two VINs are consistent.
Step 303, if the at least two VINs are inconsistent, outputting alarm information.

In this embodiment, regarding a specific implementation principle of steps 301-303, please refer to the various embodiments described above, it is not repeatedly described herein.

In step 304, transmitting the VIN of the vehicle to the server, the VIN is used by the server to search in the stolen vehicle database to determine whether the vehicle belongs to illegal vehicles.

Specifically, some or all of the obtained at least two VINs can be transmitted to the server. For example, it is possible to transmit an important VIN such as the original VIN to the server merely to reduce a server load, it is also possible to transmit the whole of the VINs to the server to improve a processing accuracy.

Preferably, different VINs in the at least two VINs can be transmitted to the server. For example, the obtained VINs comprise: a VIN V1 obtained from a vehicle body, a VIN V2 obtained from a driving license, a VIN V3 obtained from a motor, wherein, V1 is identical to V3, different VINs comprise V1 and V2, the two VINs V1 and V2 can be transmitted to the server merely.

After receiving the VINs, the server can judge whether the vehicle belongs to the illegal vehicle by means of the stolen vehicle database. Specifically, the server can compare a received VIN with the VINs in the stolen vehicle database, if there is a VIN that is identical to the received VIN in the stolen database, it is considered that the vehicle corresponding to the VIN belongs to illegal vehicles.

In step 305, receiving illegal vehicle confirmation information transmitted by the server when judging that the vehicle belongs to illegal vehicles.

In step 306, pushing illegal vehicle warning information to a police officer according to the illegal vehicle confirmation information.

Specifically, when the server judges that the vehicle belongs to illegal vehicles, it can transmit the illegal vehicle confirmation information to a vehicle detection device to notify the vehicle detection device that the vehicle belongs to illegal vehicles. After receiving the illegal vehicle confirmation information, the vehicle detection device can push the illegal vehicle warning information to the police officer, the illegal vehicle warning information is used for making the police officer be warned that the currently inspected vehicle belongs to illegal vehicles. For example, the illegal vehicle warning information can be presented as "warning! The current vehicle is an illegal vehicle" or "warning! a corresponding VIN has been searched in the stolen vehicle database".

In an actual application, the police officer can use the vehicle detection device to have a check for the vehicle, in a checking process, the vehicle detection device can use the method in this embodiment, transmit the obtained VIN to the server, such that the server can determine whether the inspected vehicle belongs to illegal vehicles according to the stolen vehicle database, in this way, the police officer can deal with the vehicle in a correct way more fast and more accurately.

In the vehicle detection method in this embodiment, by transmitting the VIN corresponding to the vehicle to the server, and receiving the illegal vehicle confirmation information sent by the server when judging that the vehicle belongs to illegal vehicles, pushing the illegal vehicle warning information to the police officer according to the illegal vehicle confirmation information, an efficiency and an accuracy of vehicle inspection can be further improved.

Based on technical solutions provided by the aforesaid various embodiments, preferably, geographic location information of the vehicle can also be obtained and transmitted to the server, the server can associate the identification information of the vehicle with the geographic location information, and store the identification information of the vehicle and the geographic location information, the server can also store corresponding time points to be provided for later search and use, thereby facilitating the police officer in checking the geographic location information and the corresponding time point of the vehicle later every time when the vehicle is inspected.

The time of obtaining the geographic location information can be set according to an actual need. Preferably, the geographic location information of the vehicle can be obtained when it is judged that the at least two VINs corresponding to the vehicle are inconsistent, and uploaded to the serve to be stored, thereby providing convenience for the server to archive the geographic location information of the vehicle which may have abnormal conditions.

Alternatively, it is still possible to obtain and upload the geographic location information of the vehicle at some other various moments. For example, the geographic location information of the vehicle can be obtained under the control of the police officer (e.g., after the police officer presses a corresponding button), or the geographic location information can be obtained every predetermined time interval, it is not limited herein.

Wherein, a locating device can be arranged in the vehicle detection device, the locating device can include at least one of the following: GPS (Global Positioning System) module, AGPS (Assisted Global Positioning System), Beidou Satellite Navigation System module, GLONASS satellite navigation system module, and so on, which implement a location positioning functionality. Correspondingly, the step of obtaining the geographic location information can include: receiving the geographic location information sent by the locating device.

It can be understood that, the servers in the aforesaid various embodiments can include one or a plurality of systems, different systems can implement different functionalities. For example, vehicle information can be obtained from one of the systems, VIN change record can be obtained from another system, which are not limited in this embodiment herein.

Value of serial number of the steps in the aforesaid embodiment doesn't mean a sequencing of execution sequences of the steps, the execution sequence of each of the steps should be determined by functionalities and internal logics of the steps themselves, and shouldn't be regarded as limitation to an implementation process of the embodiment of the present invention.

### Embodiment IV

This embodiment of the present invention provides a vehicle detection device. FIG. 4 illustrates a schematic block diagram of the vehicle detection device provided by embodiment IV of the present invention. For explaining conveniently, the parts relevant to the embodiment of the present invention are illustrated merely. The vehicle detection device can be a software unit, or a hardware unit, or a combination unit of the software unit and the hardware unit arranged in the vehicle detection equipment, or can serve as an independent pendant which is integrated into the vehicle detection equipment.

As shown in FIG. 4, the device in this embodiment can comprise:
an obtaining module 401 configured to obtain at least two vehicle identification numbers corresponding to the vehicle;
a judging module 402 configured to judge whether the at least two vehicle identification numbers are consistent; and
a pushing module 403 configured to, when the at least two vehicle identification numbers are inconsistent, output alarm information.

The vehicle detection device can be used for executing the vehicle detection method described in any one of the aforesaid embodiments, regarding the specific implementation principle thereof, please refer to any one of the aforesaid embodiments, and it is not repeatedly described herein.

In the vehicle detection method provided by the present invention, at least two VINs corresponding to the vehicle are obtained, and whether the at least two VINs are consistent is judged, if there is a VIN of a certain vehicle that is different from other VINs, the alarm information can be output, thereby facilitating the police officer in checking the vehicle according to the alarm information, providing convenience for the police officer to perform duty, and thereby improving a vehicle checking efficiency.

The present invention further provides another preferable embodiment of the vehicle detection device, in this embodiment, the vehicle detection module can include: a processor, wherein the processor is configured to execute following program modules stored in a storage device: an obtaining module 401 configured to obtain at least two vehicle identification numbers corresponding to the vehicle; a judging module 402 configured to judge whether the at least two vehicle identification numbers are consistent; and a pushing module 403 configured to, when the at least two vehicle identification numbers are inconsistent, output alarm information.

Optionally, the obtaining module 401 is specifically configured to:
obtain an original vehicle identification number corresponding to the vehicle when it being completely manufacturing through an OBD interface; and
receive a vehicle body vehicle identification number obtained by a laser scanning device or photographing device by scanning or photographing the vehicle body, and/or receive a driving license vehicle identification number obtained by a NFC device by scanning the driving license of a driver, and/or receive a vehicle identification number corresponding to the vehicle plate information from a server according to obtained vehicle plate information of the vehicle.

Optionally, the obtaining module 401 is specifically configured to:
compare the original vehicle identification number with the vehicle body vehicle identification number, and/or the driving license vehicle identification number, and/or the vehicle identification number corresponding to the vehicle plate information one by one;
determine that the at least two vehicle identification numbers are consistent if a comparison result indicates that they are the same; or
determine that the at least two vehicle identification numbers are inconsistent if the comparison result indicates that they are different.

Optionally, the pushing module 403 can be further configured to:
transmit inquiry information to the server when the at least two vehicle identification numbers are inconsistent, wherein the inquiry information includes identification information of the vehicle;
receive registration information corresponding to the vehicle returned by the server according to the identification information; and
push the registration information to a police officer thereby facilitating the police officer in checking whether the vehicle is an illegal vehicle.

The registration information can include at least one of the following: vehicle owner information, vehicle plate information, vehicle information, VIN change record information, history location information, maintenance data information.

Optionally, the pushing module 403 can be further configured to:
transmit the vehicle identification number of the vehicle to the server, wherein the vehicle identification number is used by the server to check whether the vehicle is the illegal vehicle by searching in a stolen vehicle database;
receive illegal vehicle confirmation information sent by the server when judging that the vehicle is the illegal vehicle; and
push illegal vehicle alarm information to the police officer according to the illegal vehicle confirmation information.

Optionally, the pushing module 403 can be further configured to:
obtain geographic location information of the vehicle; and
transmit the geographic location information and the vehicle identification information to the server so that the server associates the geographic location information with the vehicle identification information and stores the geographic location information and the vehicle identification information.

It can be clearly understood by one or ordinary skill in the art that, for describing conveniently and concisely, dividing of the aforesaid various functional units, functional modules is exemplified merely, in an actual application, the aforesaid functions can be assigned to different functional units and functional modules to be accomplished, that is, an inner structure of a data synchronizing device is divided into functional units or modules so as to accomplish the whole or a part of functionalities described above. The various functional units, modules in the embodiments can be integrated into a processing unit, or each of the units exists independently and physically, or two or more than two of the units are integrated into a single unit. The aforesaid integrated unit can by either realized in the form of hardware or in the form of software functional units. In addition, specific names of the various functional units and modules are only used for distinguishing from each other conveniently, but not intended to limit the protection scope of the present invention. Regarding a specific working process of the units and modules in the aforesaid device, please refer to a corresponding process in the aforesaid method embodiments, it is not repeatedly described herein.

### Embodiment V

The embodiment of the present invention provides a vehicle detection equipment.

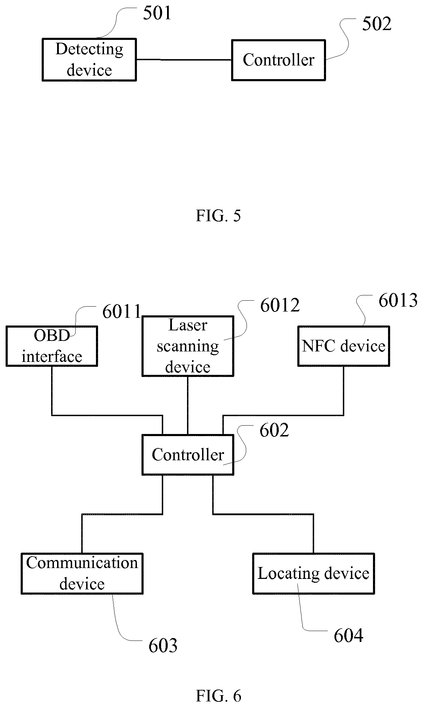

FIG. 5 illustrates a schematic block diagram of a vehicle detection equipment provided by Embodiment V of the present invention. As shown in FIG. 5, the vehicle detection equipment in this embodiment can comprise: a detection device 501 and a controller 502;
the detector 501 is connected with the controller 502;
the detector 501 is configured to: detect at least two vehicle identification numbers corresponding to the vehicle, and transmit the at least two vehicle identification numbers to the controller;
the controller 502 is configured to: obtain the at least two vehicle identification numbers corresponding to the vehicle and judging whether the at least two vehicle identification numbers are consistent, and output alarm information if the at least two vehicle identification numbers are inconsistent.

Regarding the specific implementation principle of the vehicle detection equipment in this embodiment, please refer to any one of the aforesaid embodiments, and it is not repeatedly described herein.

In the vehicle detection equipment provided by the present invention, at least two VINs corresponding to the vehicle are obtained, and whether the at least two VINs are consistent is judged, if there is a VIN of a certain vehicle that is different from other VINs, the alarm information can be output, thereby facilitating the police officer in checking the vehicle according to the alarm information, providing convenience for the police officer to perform duty, and thereby improving a vehicle checking efficiency.

Based on the technical solution provided by Embodiment V, preferably, the detection device can comprise OBD interface connected with the controller and at least one of the following: the vehicle body VIN obtaining device connected with the controller, the NFC device connected with the controller. Wherein, the vehicle body VIN obtaining device can be a laser scanning device or a photographing device. Detailed explanation will be given below by taking Embodiment VI as example.

### Embodiment VI

Embodiment VI of the present invention provides a vehicle detection equipment. This embodiment implements obtaining VINs (Vehicle Identification Numbers) through an OBD (On-Board Diagnostic) interface, a NFC (Near Field Communication) device, and a laser scanning device based on the technical solutions provided by Embodiment V.

FIG. 6 illustrates a schematic block diagram of the vehicle detection equipment provided by Embodiment V1 of the present invention. As shown in FIG. 6, the vehicle detection equipment in this embodiment can comprise: a detection device and a controller 602;
Wherein, the detection device can include: an OBD interface 6011 connected with the controller 602 and at least one of the following: a laser scanning device 6012 connected with the controller 602, and a NFC device 6013 connected with the controller 602.
the OBD interface 6011 is configured to: connect with the vehicle, detect an original VIN (Vehicle Identification Number) of the vehicle, and transmit the original VIN of the vehicle to the controller 602;
the laser scanning device 6012 is configured to: scan the vehicle body, detect the vehicle body vehicle identification number of the vehicle, and transmit the vehicle body vehicle identification number to the controller 602;
the NFC device 6013 is configured to: scan a driving license of a driver who drives the vehicle, detect a VIN of the driving license, and transmit the VIN of the driving license to the controller 602.

In this embodiment, the vehicle body VIN obtaining device applies the laser scanning device 6012, optionally, the photographing device can be used to replace the laser scanning device 6012, the photographing device is configured to photograph the vehicle body, detect the vehicle body VIN of the vehicle and transmit the vehicle body VIN to the controller 602.

The controller 602 is specifically configured to: obtain the original vehicle identification number corresponding to the vehicle when it being completely manufacturing through the OBD interface 6011; receive a vehicle body VIN obtained by the laser scanning device 6012 or the photographing device by scanning or photographing the vehicle body; and/or receive a driving license VIN obtained by the NFC device 6013 by scanning the driving license of the driver; and/or receive a VIN corresponding to vehicle plate information from a server according to the obtained vehicle plate information of the vehicle; judge whether the at least two vehicle identification numbers are consistent, and output alarm information if the at least two vehicle identification numbers are inconsistent.

Alternatively, the controller 602 can be specifically configured to: obtain the original VIN corresponding to the vehicle when it being completely manufacturing through the OBD interface 6011; receive a vehicle body VIN obtained by the laser scanning device 6012 or the photographing device by scanning or photographing the vehicle body; and/or receive a driving license VIN obtained by the NFC device 6013 by scanning the driving license of the driver; and/or receive a VIN corresponding to vehicle plate information from a server according to obtained vehicle plate information of the vehicle; compare the original VIN with the vehicle body VIN, and/or the driving license VIN, and/or the VIN corresponding to the vehicle plate information one by one, and determine that the at least two VINs are consistent if a comparison result indicates that they are the same, or determine that the at least two VINs are inconsistent if the comparison result indicates that they are different.

Optionally, the vehicle detection equipment can also comprise: a communication device 603 connected with the controller 602.

The controller 602 can transmit the vehicle plate information of the vehicle to the server through the communication device 603, and receive the VIN corresponding to the vehicle plate information sent by the server through the communication device 603.

It can be understood that, the communication between the controller 602 and the server can be implemented by the communication device 603.

Optionally, the controller 602 can also be configured to:
transmit inquiry information to the server when the at least two VINs are inconsistent, wherein the inquiry information includes the vehicle identification information;
receive registration information corresponding to the vehicle returned by the server according to the identification information; and
push the registration information to a police officer, thereby facilitating the police officer in checking whether the vehicle is an illegal vehicle.

Optionally, the registration information can include at least one of the following: vehicle owner information, vehicle plate information, vehicle information, VIN change record information, history location information, maintenance data information.

Optionally, the controller 602 is further configured to:
transmit the VIN of the vehicle to the server, wherein the VIN is used by the server to check whether the vehicle is the illegal vehicle by searching in a stolen vehicle database;
receive illegal vehicle confirmation information sent by the server when judging that the vehicle is the illegal vehicle; and
push illegal vehicle alarm information to the police officer according to the illegal vehicle confirmation information.

Optionally, the vehicle detection device can further comprise: a locating device 604 connected with the controller 602. The controller 602 is further configured to:
obtain geographic location information of the vehicle; and
transmit the geographic location information and the vehicle identification information to the server, so that the server associates the geographic location information with the vehicle identification information, and stores the geographic location information and the vehicle identification information.

Wherein, the step of obtaining the geographic location information of the vehicle can include: receiving the geographic information sent by the locating device 604.

Optionally, the vehicle detection equipment can also include: a pushing device connected with the controller 602. The controller 602 can push information to the police officer through the pushing device, the pushing device can be a displaying device or voice broadcasting device, etc.

Regarding the structure and functionalities of each of the components in this embodiment, please refer to any one of the embodiments described above, and it is not repeatedly described herein.

In the vehicle detection equipment of this embodiment, the at least two VINs can be obtained by the OBD interface 6011, the laser scanning device 6012 or the photographing device, and the NFC device 6013 fast and accurately; when the at least two VINs are inconsistent, the registration information corresponding to the vehicle can be obtained from the server and pushed to the police officer, such that the police officer can find defective vehicles timely and accurately, thereby making the stolen vehicles and refitted vehicles get nowhere to run.

An embodiment of the present invention further provides a computer readable storage medium, wherein the computer readable storage medium stores computer program which implements steps in the vehicle detection method in any one of aforesaid embodiments when being executed by one or a plurality of processor(s).

Specifically, when the computer program is executed by the one or plurality of processor(s), following steps can be implemented:
obtaining at least two vehicle identification numbers corresponding to the vehicle; and
judging whether the at least two vehicle identification numbers are consistent;
if the at least two vehicle identification numbers are inconsistent, outputting alarm information.

Optionally, obtaining the at least two vehicle identification numbers corresponding to the vehicle specifically comprises:
obtaining an original vehicle identification number corresponding to the vehicle when it being completely manufacturing through an OBD interface of a vehicular self-diagnosis system; and
receiving a vehicle body vehicle identification number obtained by a laser scanning device or photographing device by scanning or photographing the vehicle body, and/or receiving a driving license vehicle identification number obtained by a NFC device by scanning the driving license of a driver, and/or receiving a vehicle identification number corresponding to vehicle plate information from a server according to obtained vehicle plate information of the vehicle.

Optionally, judging whether the at least two vehicle identification numbers are consistent specifically comprises:
comparing the original vehicle identification number with the vehicle body vehicle identification number, and/or the driving license vehicle identification number, and/or the vehicle identification number corresponding to the vehicle plate information one by one;
determining that the at least two vehicle identification numbers are consistent if a comparison result indicates that they are the same; or
determining that the at least two vehicle identification numbers are inconsistent if the comparison result indicates that they are different.

Optionally, when the computer program is executed by the one or plurality of processor(s), following steps can be implemented:
when the at least two vehicle identification numbers are inconsistent, transmitting inquiry information to the server, wherein the inquiry information includes identification information of the vehicle;
receiving registration information corresponding to the vehicle returned by the server according to the identification information; and
pushing the registration information to a police officer, thereby facilitating the police officer in checking whether the vehicle is an illegal vehicle.

Optionally, when the computer program is executed by the one or plurality of processor(s), following steps can be implemented:
transmitting the vehicle identification number of the vehicle to the server, the vehicle identification number is used by the server to check whether the vehicle is the illegal vehicle by searching in a stolen vehicle database;
receiving illegal vehicle confirmation information sent by the server when judging that the vehicle is the illegal vehicle; and
pushing illegal vehicle alarm information to the police officer according to the illegal vehicle confirmation information.

Optionally, when the computer program is executed by the one or plurality of processor(s), following steps can be implemented:
obtaining geographic location information of the vehicle; and
transmitting the geographic location information and the vehicle identification information to the server, so that the server associates the geographic location information with the vehicle identification information and stores the geographic location information and the vehicle identification information.

Wherein, the computer programs comprise computer program codes, which can be in the form of source code, object code, executable documents or some intermediate form, etc. The computer readable medium can include: any entity or device that can carry the computer program codes, recording medium, USB flash disk, mobile hard disk, hard disk, optical disk, computer storage device, ROM (Read-Only Memory), RAM (Random Access Memory), electrical carrier signal, telecommunication signal and software distribution medium, etc. It needs to be explained that, the contents contained in the computer readable medium can be added or reduced appropriately according to the requirement of legislation and patent practice in a judicial district, for example, in some judicial districts, according to legislation and patent practice, the computer readable medium doesn't include electrical carrier signal and telecommunication signal.

An embodiment of the present invention further provides a computer program product, the computer program product comprises computer program which implement the steps in the vehicle detection method in any one of the embodiments described above when being executed by one or a plurality of processor(s).

In the aforesaid embodiments, the description of each of the embodiments is emphasized respectively, regarding a part of one embodiment which isn't described or disclosed in detail, please refer to relevant descriptions in some other embodiments.

The aforesaid embodiments are only intended to explain but not to limit the technical solutions of the present invention. Although the present invention has been explained in detail with reference to the above-described embodiments, it should be understood for the one of ordinary skill in the art that, the technical solutions described in each of the above-described embodiments can still be amended, or some technical features in the technical solutions can be replaced equivalently; these amendments or equivalent replacements won't make the essential of corresponding technical solution to be broken away from the spirit and the scope of the technical solution in various embodiments of the present invention, should all be included in the protection scope of the present invention.

## Claims

1. A vehicle detection method comprising:
obtaining at least two vehicle identification numbers corresponding to the vehicle;
judging whether the at least two vehicle identification numbers are consistent; and
outputting alarm information if the at least two vehicle identification numbers are inconsistent.

2. The vehicle detection method according to claim 1, wherein obtaining at least two vehicle identification numbers corresponding to the vehicle comprises:
obtaining an original vehicle identification number corresponding to the vehicle when being completed manufacturing through an OBD interface of a vehicular self-diagnosis system; and
receiving a vehicle body vehicle identification number obtained by a laser scanning device or photographing device by scanning or photographing the vehicle body, and/or receiving a driving license vehicle identification number obtained by a NFC device by scanning the driving license of a driver, and/or receiving a vehicle identification number corresponding to vehicle plate information from a server according to obtained vehicle plate information of the vehicle.

3. The vehicle detection method according to claim 2, wherein judging whether the at least two vehicle identification numbers are consistent specifically comprises:
comparing the original vehicle identification number with the vehicle body vehicle identification number, and/or the driving license vehicle identification number, and/or the vehicle identification number corresponding to the vehicle plate information one by one; and
determining that the at least two vehicle identification numbers are consistent if a comparison result indicates that they are the same; or
determining that the at least two vehicle identification numbers are inconsistent if the comparison result indicates that they are different.

4. The vehicle detection method according to claim 1, wherein when the at least two vehicle identification numbers are inconsistent, the method further comprises:
transmitting inquiry information to the server, wherein the inquiry information includes identification information of the vehicle;
receiving registration information corresponding to the vehicle returned by the server according to the identification information; and
pushing the registration information to a police officer, thereby facilitating the police officer in checking whether the vehicle is an illegal vehicle.

5. The vehicle detection method according to any one of claims 1-4, further comprising:
transmitting the vehicle identification number of the vehicle to the server, wherein the vehicle identification number is used by the server to check whether the vehicle is the illegal vehicle by searching in a stolen vehicle database;
receiving illegal vehicle confirmation information sent by the server when judging that the vehicle is the illegal vehicle; and
pushing illegal vehicle alarm information to the police officer according to the illegal vehicle confirmation information.

6. The vehicle detection method according to any one of claims 1-4, further comprising:
obtaining geographic location information of the vehicle; and
transmitting the geographic location information and the vehicle identification information to the server, so that the server associates the geographic location information with the vehicle identification information and stores the geographic location information and the vehicle identification information.

7. A vehicle detection device comprising:
an obtaining module configured to obtain at least two vehicle identification numbers corresponding to the vehicle;
a judging module configured to judge whether the at least two vehicle identification numbers are consistent; and
a pushing module configured to, when the at least two vehicle identification numbers are inconsistent, output alarm information.

8. The vehicle detection device according to claim 7, wherein the obtaining module is specifically configured to:
obtain an initial vehicle identification number corresponding to the vehicle when it being completely manufacturing through an OBD interface of a vehicular self-diagnosis system; and
receive a vehicle body vehicle identification number obtained by a laser scanning device or photographing device by scanning or photographing the vehicle body, and/or receive a driving license vehicle identification number obtained by a NFC device by scanning the driving license of a driver, and/or receive a vehicle identification number corresponding to vehicle plate information from a server according to obtained vehicle plate information of the vehicle.

9. A vehicle detection equipment, comprising a detector and a controller; wherein,
the detector is connected with the controller;
the detector is configured to: detect at least two vehicle identification numbers corresponding to the vehicle, and transmit the at least two vehicle identification numbers to the controller;
the controller is configured to: obtain the at least two vehicle identification numbers corresponding to the vehicle and judge whether the at least two vehicle identification numbers are consistent, and output alarm information if the at least two vehicle identification numbers are inconsistent.

10. The vehicle detection equipment according to claim 9, wherein, the detector comprises an OBD interface connected with the controller, and at least one of the following: a vehicle body vehicle identification number obtaining device connected with the controller, an NFC device connected with the controller; wherein the vehicle body vehicle identification number obtaining device is a laser scanning device or a photographing device;
the OBD interface is configured to: connect with the vehicle, detect an original vehicle identification number of the vehicle, and transmit the original vehicle identification number of the vehicle to the controller;
the laser scanning device is configured to: scan the vehicle body, detect the vehicle body vehicle identification number of the vehicle, and transmit the vehicle body vehicle identification number to the controller;
the photographing device is configured to: photograph the vehicle body, detect the vehicle identification number of the vehicle body of the vehicle, and transmit the vehicle identification number of the vehicle body to the controller;
the NFC device is configured to: scan a driving license of a driver who drives the vehicle, detect the vehicle identification number of the driving license, and transmit the vehicle identification number of the driving license to the controller;
the controller is specifically configured to: obtain the original vehicle identification number corresponding to the vehicle when it being completely manufacturing through the OBD interface; receive a vehicle body vehicle identification number obtained by the laser scanning device or the photographing device by scanning or photographing the vehicle body; and/or receive a driving license vehicle identification number obtained by the NFC device by scanning the driving license of the driver; and/or receive a vehicle identification number corresponding to vehicle plate information from a server according to the obtained vehicle plate information of the vehicle; judge whether the at least two vehicle identification numbers are consistent, and output alarm information if the at least two vehicle identification numbers are inconsistent.

11. The vehicle detection equipment according to claim 9, wherein the detector comprises an OBD interface connected with the controller, and at least one of the following: a vehicle body vehicle identification number obtaining device connected with the controller, a NFC device connected with the controller; wherein the vehicle body vehicle identification number obtaining device is a laser scanning device or a photographing device;
the OBD interface is configured to: connect with the vehicle, detect an original vehicle identification number of the vehicle, and transmit the original vehicle identification number of the vehicle to the controller;
the laser scanning device is configured to: scan the vehicle body, detect the vehicle body vehicle identification number of the vehicle, and transmit the vehicle body vehicle identification number to the controller;
the photographing device is configured to: photograph the vehicle body, detect the vehicle identification number of the vehicle body of the vehicle, and transmit the vehicle identification number of the vehicle body to the controller;
the NFC device is configured to scan a driving license of a driver who drives the vehicle, detect the vehicle identification number of the driving license, and transmit the vehicle identification number of the driving license to the controller;
the controller is specifically configured to: obtain the original vehicle identification number corresponding to the vehicle when it being completely manufacturing through the OBD interface; receive a vehicle body vehicle identification number obtained by the laser scanning device or the photographing device by scanning or photographing the vehicle body; and/or receive a driving license vehicle identification number obtained by the NFC device by scanning the driving license of the driver; and/or receive a vehicle identification number corresponding to vehicle plate information from a server according to obtained vehicle plate information of the vehicle; compare the original vehicle identification number with the vehicle body vehicle identification number, and/or the driving licenser vehicle identification number, and/or the vehicle identification number corresponding to the vehicle plate information one by one, and determine that the at least two vehicle identification numbers are consistent if a comparison result indicates that they are the same, or determine that the at least two vehicle identification numbers are inconsistent if the comparison result indicates that they are different.

12. The vehicle detection equipment according to claim 9, wherein the controller is further configured to:
transmit inquiry information to the server when the at least two vehicle identification numbers are inconsistent, wherein the inquiry information includes the vehicle identification information;
receive registration information corresponding to the vehicle returned by the server according to the identification information; and
push the registration information to a police officer, thereby facilitating the police officer in checking whether the vehicle is an illegal vehicle.

13. The vehicle detection equipment according to any one of claims 9-12, wherein the controller is further configured to:
transmit the vehicle identification number of the vehicle to the server, wherein the vehicle identification number is used by the server to check whether the vehicle is the illegal vehicle by searching in a stolen vehicle database;
receive illegal vehicle confirmation information sent by the server when judging that the vehicle is the illegal vehicle; and
push illegal vehicle alarm information to the police officer according to the illegal vehicle confirmation information.

14. The vehicle detection equipment according to any one of claims 9-12, wherein the controller is further configured to:
obtain geographic location information of the vehicle; and
transmit the geographic location information and the vehicle identification information to the server so that the server associates the geographic location information with the vehicle identification information, and stores the geographic location information and the vehicle identification information.

15. A computer readable storage medium, wherein the computer readable storage medium stores computer program which implements steps in the method according to any one of claims 1-6 when being executed by one or a plurality of processor(s).
